# EUROPEAN PATENT SPECIFICATION

(11) **EP 2 905 198 B1**
(45) Date of publication and mention of the grant of the patent: **21.08.2019**
(21) Application number: 14460136.6
(22) Date of filing: 31.12.2014
(51) Int. Cl.: B62B 9/10, B62B 9/14

(54) **TRANSPARENT CANOPY AND GONDOLA OF BABY CARRIAGE**
DURCHSICHTIGES VERDECK UND LIEGEEINSATZ FÜR KINDERWAGEN
CAPOTE ET NACELLE TRANSPARENTE DE LANDAU

(30) Priority: 31.12.2013 PL 40676313; 31.12.2013 PL 40676413
(43) Date of publication of application: 12.08.2015
(73) Proprietor: Czupryna, Slawomir, 42-200 Czestochowa (PL)
(72) Inventor: Slawomir, Czupryna, 42-200 Czestochowa (PL); Jaroslaw, Czupryna, 42-200 Czestochowa (PL)
(74) Representative: Korbela, Anna

(56) References cited:
- DE-U- 6 926 781
- US-A- 2 475 775
- US-A- 3 575 461
- US-A- 3 918 759
- US-B1- 6 517 153

## Description

The subject of the invention is carrycot and canopy for a baby carriage suitable to be placed and connected to the carriage frame.

Until now, there are many known constructions, regarding the construction of carrycot and canopy for baby carriages.

And so, it is known from the Polish description of patent application number P-344613 the "Carrycot for baby carriage" (publ. BUP 13/2002). This solution is characterized in that, it is a uniform structure in form of a shell made of homogeneous plastic material, preferably from PVC, on the surface of which are made reinforcing embossments, and in the lower part of the shell are placed rocks.

Another solution regarding carrycot for baby carriage has been presented in Polish description of utility model application number W-103994 "Carrycot for baby carriage" (publ. BUP 14/1997). This carrycot consists of supporting structure comprising top frame, vertical connecting elements and bottom frame as well as of an input and rigid bottom of carrycot.

Also are known different constructions, which have been made from transparent material, obtaining unexpectedly new properties of known constructions. And, so it is known from the Polish description of patent application number P-342659 the construction "Transparent filter, increasing grease pressure before start of combustion engine" (publ. BUP 14/2011). Transparent filter consists of: flat generator DC, retardant, oil pump, non-return valve, glass cover and base. Paper filter core is placed in the glass cover made of tempered glass resistant to high temperatures, while the base is identical to the bases of ordinary filters.

Another solution regarding carrycot for baby carriage has been presented in Polish description of utility model application number W-121859 "Carrycot for baby carriage in particular". The developed carrycot made by thermoforming or plastic injection, preferably from materials PE (polyethylene or polyethene), ABS (acylonitrile butadiene styrene), MPMA (methyl polymetacrylan) or from double layer panel ABS MPMA A, is characterized in that on the outer surface of the carrycot is placed a decorative motif, applied preferably using screen printing technique or spraying or decorative film wrapping. U.S. Patent 3,918,759 describes a baby carriage where the whole body and/or the hood are made of transparent material from any suitable plastic material. The body can be made in one piece from a transparent, preferably completely clear plastic material. DE 6926781 U also describes a baby carriage with a body and a hood made of transparent plastic material. US 2,475,775 A1 and US 3,575,461 A1 describe baby carriages being made partly of transparent plastic material.

The aim of the developed invention is to obtain a new carrycot and canopy construction, which will facilitate much better childcare. The object is achieved by carrycot and canopy for a baby carriage according to claim 1. The essence of the elaborated carrycot for baby carriage is that the shell of uniform construction made of plastic selected from materials PE (polyethylene or polyethene), ABS (acylonitrile butadiene styrene), MPMA (methyl polymetacrylan) or from double layer panel ABS MPMA is transparent.

Preferably in the carrycot walls non-transparent elements are immersed.

Preferably on the carrycot walls decorative motifs are placed.

Preferably transparent or non-transparent decorative motifs constitute convex or concave elements in relation to carrycot walls or/and are wrapped on carrycot walls or/and are painted on carrycot walls, preferably using screen printing technique or printing technique or spraying technique.

Preferably the carrycot edge has a decorative excess material, generally convex in relation to the outer surface of carrycot walls.

Preferably the carrycot bottom is non-transparent.

The essence of the developed canopy is that it has at least two panels made of transparent, stiff but flexible plastic selected from materials PE (polyethylene or polyethene), ABS (acylonitrile butadiene styrene), MPMA (methyl polymetacrylan) or from double layer panel ABS MPMA.

The canopy for a baby carriage has at least two panels, wherein at least one panel along its one edge is contoured with a ridge and at least in one panel at the opposite edge of the panel is located a longitudinal hollow, and the ends of all panels are fastened on both sides with connectors.

Preferably in the carrycot panel for baby carriage in particular, are immersed decorative elements.

Preferably on the panel of canopy are placed transparent and non-transparent decorative motifs, wherein decorative elements are convex or concave in relation to the panel surface or/and are wrapped on panel surface or/and are painted on the panel, preferably using screen printing technique or printing technique or spraying technique.

Preferably the panel edge has a decorative excess material, preferably convex in relation to the outer surface of the panel.

The advantage of the construction, according the developed invention is safety improvement of transported child. Transparent canopy for baby carriage allows the guardians careful observation of the child and objects that surround him, and allow quick improvement, in case they are hurting the passenger of baby carriage. In conditions, where each child's head movement is exactly observed by the person conducting the baby carriage - it is easy to improve safety and comfort of the lying child.

The developed canopy has a construction, which creates the possibility to observe correct positioning of child's head and objects, which surround him, and at the same time creates comfortable conditions for the transported baby, who while seeing his guardians moving around the carriage - is calm, because it feels safe.

The developed transparent canopy for baby carriage is at the same time extremely aesthetic while maintaining the required safety standards. It is produced in an uncomplicated, economic and known technological process.

The advantage of the construction, according the developed invention is the safety improvement of transported child. Transparent carrycot for baby carriage allows the guardians careful observation of the child and objects that surround him, and allow quick improvement, in case they are hurting the passenger of baby carriage. In conditions, where each child's head movement is exactly observed by the person conducting the baby carriage - it is easy to improve safety and comfort of the lying child.

The developed carrycot has a construction, which creates the possibility to observe the correct positioning of child and objects, which surround him, and at the same time creates comfortable conditions for the transported baby, who while seeing his guardians moving around the carriage - is calm, because it feels safe.

The developed transparent carrycot for baby carriage is at the same time extremely aesthetic while maintaining the required safety standards. It is produced in an uncomplicated, economic and known technological process.

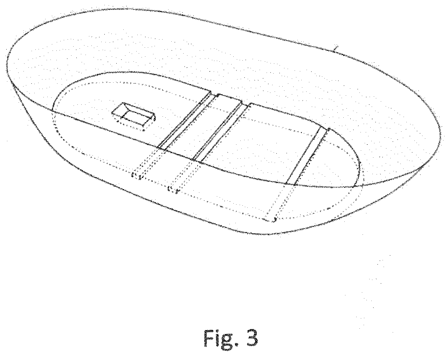

Carrycot for a baby carriage, according the developed invention, has been shown closer in example of accompanying drawing in Fig. 3, which shows plastic transparent carrycot in a perspective view diagonally from side.

As shown on the drawing in Fig. 3, the developed solution essentially constitutes a uniform construction in form of so-called shell, which forms the carrycot, which is made by thermoforming or plastic injection, preferably from materials PE (polyethylene or polyethene), ABS (acylonitrile butadiene styrene), MPMA (methyl polymetacrylan) or from double layer panel ABS MPMA A. Wherein, the whole carrycot is transparent. Additionally, in the transparent carrycot walls may be immersed non-transparent elements, which will be fixing eyes of child and guardians. These elements may totally be immersed in the carrycot walls, or they may be convex or concave elements in relation to outer surface of carrycot.

Decorative motifs can be also applied to the outer surface of carrycot by wrapping, as well as a decorative adhesive film or painted on the outer surface of carrycot, preferably using screen printing technique or printing technique or spraying.

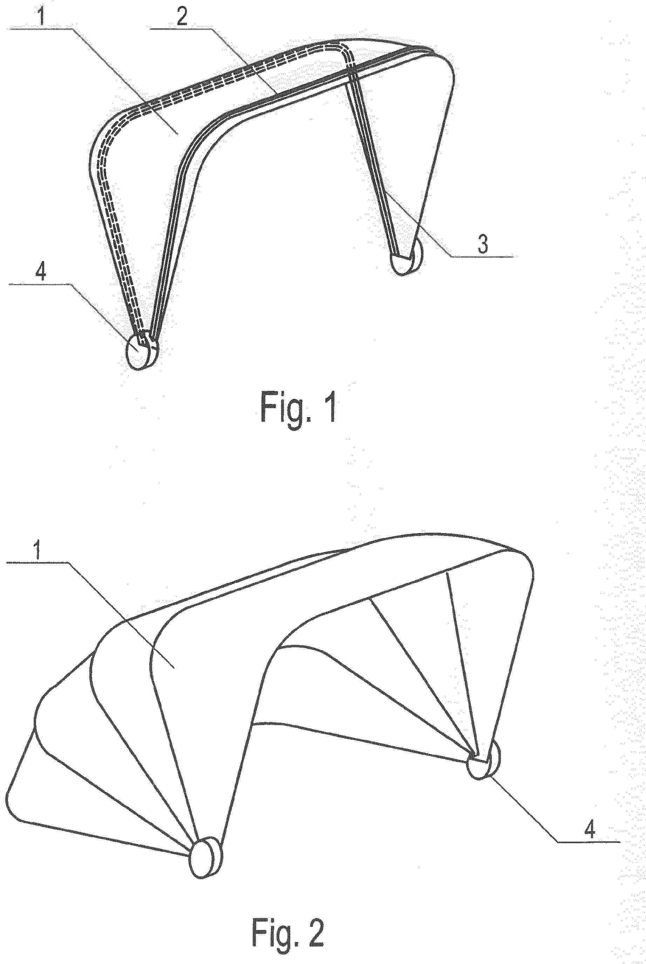

As shown on the drawings in Fig. 1 and Fig. 2, the developed solution constitutes also a construction consisting of individual panels 1, which form together the canopy. Panel 1 is made of plastic, preferably from materials PE (polyethylene or polyethene), ABS (acylonitrile butadiene styrene), MPMA (methyl polymetacrylan) or from double layer panel ABS MPMA A and is rather stiff, but at the same time enough flexible, so that it can be bent in form of arch. Panel 1 along its one edge is contoured by longitudinal ridge 2, which corresponds to placed on the opposite side, along opposite edge of panel 1, located here a longitudinal hollow 3. The ends of all panels 1, are fastened on both sides with connectors 4, which adjustable clamp loosens mutual distances between the ends of panels 1, whereby is possible its fan-shaped spreading or tightening and compression of all ends of panel 1, whereby the expected arrangement of panels 1 is blocked and recorded. During extending panels 1 their maximum inclination is limited by interlocking: longitudinal ridge 2 and longitudinal hollow 3.

Furthermore, in transparent panels 1 may be immersed non-transparent elements, which will be fixing eyes of child and guardians. These elements may be totally immersed in walls of panel 1, or they can be convex or concave elements in relation to outer surface of panel 1.

Decorative motifs may be applied also on the outer surface of panels 1 by wrapping, also as a decorative adhesive film or painted on the outer surface of panels 1, preferably using screen printing technique or printing or spraying.

## Claims

1. Carrycot and canopy for a baby carriage suitable to be placed and connected to the carriage frame, wherein the carrycot consists of a uniform construction shell made by thermoforming or plastic injection of plastic selected from materials PE (polyethylene or polyethene), ABS (acylonitrile butadiene styrene), MPMA (methyl polymetacrylan) or from double layer panel ABS MPMA, wherein the whole carrycot is transparent, and the canopy comprises at least two panels (1) made of transparent, stiff but flexible plastic selected from materials PE (polyethylene or polyethene), ABS (acylonitrile butadiene styrene), MPMA (methyl polymetacrylan) or from double layer panel ABS MPMA, wherein at least one panel (1) along its one edge is contoured with a longitudinal ridge (2) and at least in one panel (1) at the opposite edge of panel (1) is located a longitudinal hollow (3), and the ends of all panels (1) are fastened on both sides with connectors (4).

## Patentansprüche

1. Liegeeinsatz und Verdeck für einen Kinderwagen, der zum Aufsetzen und Verbinden mit dem Wagenrahmen geeignet ist, **gekennzeichnet durch** der Liegeeinsatz aus einer einheitlichen Konstruktionsschale, hergestellt durch Thermoformen oder Kunststoffeinspritzen von Kunststoffen, gewählt aus den Materialien PE (Polyethylen oder Polyethen), ABS (Acylonitril-Butadien-Styrol), MPMA (Methylpolymetacrylan) oder aus einer Zweischicht-Platte ABS MPMA, wobei der gesamte Liegeeinsatz transparent ist und das Verdeck mindestens zwei Platten (1) aus transparentem, steifem, aber flexiblem Kunststoff, gewählt aus den Materialien PE (Polyethylen oder Polyethen), umfasst, ABS (Acylonitril-Butadien-Styrol), MPMA (Methylpolymetacrylan) oder aus einer Zweischicht-Platte ABSMPMA, wobei mindestens eine Platte (1) entlang ihrer einen Kante mittels Längskamm (2) konturiert ist und mindestens in einer Platte (1) an der Konträrkante der Platte (1) eine Längskavität (3) angeordnet ist und die Enden aller Platten (1) beiderseits mit Verbindern (4) befestigt sind.

## Revendications

1. Nacelle et capote pour un landau pouvant être placé et relié au châssis du landau, **caractérisés en ce que** la nacelle est constituée d'une coque de construction uniforme réalisée par thermoformage ou injection plastique de plastique choisi parmi les matériaux PE (polyéthylène ou polyéthène), ABS (acylonitrile butadiène styrène), MPMA (méthyl polymétacrylane) ou de panneaux à double couche ABS MPMA, où la nacelle est entièrement transparente et la capote comprend au moins deux panneaux (1) en matière plastique transparente, rigide mais flexible, choisis parmi les matériaux PE (polyéthylène ou polyéthène), ABS (acylonitrile butadiène styrène), MPMA (méthyl polymétacrylane) ou un panneau à double couche ABS MPMA, où au moins un panneau (1), le long de son bord est entouré d'une crête longitudinale (2) et au moins dans un panneau (1), sur le bord opposé du panneau (1) se trouve un creux longitudinal (3), et les extrémités de tous les panneaux (1) sont attachés des deux côtés à l'aide de connecteurs (4).
